(19) **Europäisches Patentamt**
**European Patent Office**
**Office européen des brevets**

(11) **EP 3 535 097 B1**

(12) **EUROPÄISCHE PATENTSCHRIFT**

(45) Veröffentlichungstag und Bekanntmachung des Hinweises auf die Patenterteilung:
**03.07.2024 Patentblatt 2024/27**

(21) Anmeldenummer: **17801352.0**

(22) Anmeldetag: **26.10.2017**

(51) Internationale Patentklassifikation (IPC):
**B25J 9/16** (2006.01)

(52) Gemeinsame Patentklassifikation (CPC):
**B25J 9/1692; B25J 9/1638; B25J 9/1641**

(86) Internationale Anmeldenummer:
**PCT/EP2017/077481**

(87) Internationale Veröffentlichungsnummer:
**WO 2018/083008 (11.05.2018 Gazette 2018/19)**

(54) **KALIBRIEREN EINES MODELLS EINES PROZESS-ROBOTERS UND BETREIBEN EINES PROZESS-ROBOTERS**

CALIBRATING A MODEL OF A PROCESS ROBOT AND OPERATING A PROCESS ROBOT

ÉTALONNAGE D'UN MODÈLE D'UN ROBOT DE TRAITEMENT ET UTILISATION D'UN ROBOT DE TRAITEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.11.2016 DE 102016013083**

(43) Veröffentlichungstag der Anmeldung:
**11.09.2019 Patentblatt 2019/37**

(73) Patentinhaber: **KUKA Deutschland GmbH 86165 Augsburg (DE)**

(72) Erfinder:
• **STIMMEL, Burkhard 82547 Achmühle (DE)**

• **TSCHARNUTER, Dietmar 86316 Friedberg (DE)**
• **RÖSSIG, Rene 86159 Augsburg (DE)**
• **HÜTTENHOFER, Manfred 86405 Meitingen (DE)**

(74) Vertreter: **Schlotter, Alexander Carolus Paul Wallinger Ricker Schlotter Tostmann Patent- und Rechtsanwälte Partnerschaft mbB Zweibrückenstrasse 5-7 80331 München (DE)**

(56) Entgegenhaltungen:
**EP-A2- 1 604 789    EP-A2- 2 199 036
EP-B1- 2 272 637**

**Beschreibung**

Die vorliegende Erfindung betrifft ein Verfahren und ein System zum Kalibrieren eines Modells und/oder zum Betreiben eines Prozess-Roboters, eine Roboteranordnung, die den Prozess-Roboter und das System aufweist, sowie ein Computerprogrammprodukt zur Durchführung des Verfahrens.

Aus der EP 2 272 637 B1 ist ein Verfahren zum Betreiben eines Roboters bekannt, bei dem Parameter eines Modells des Roboters mit verschiedenen Nennlasten bestimmt und der Roboter auf Basis dieses Modells betrieben wird, wobei die Parameter in Abhängigkeit von einer Nutzlast des Roboters vorgegeben werden.

Die EP 2 504 741 B1 betrifft ein Verfahren zum Erstellen eines absolutgenauen Robotermodells, wobei wie in der EP 2 272 637 B1 unterschiedliche Posen des Roboters angefahren werden.

Aus der DE 10 2015 009 872 A1 ist eine Robotersteuervorrichtung bekannt, die eine Korrekturumfangsberechnungseinheit, die einen Korrekturumfang zum Korrigieren einer Ablenkung einer Spitzenposition des Werkzeugs aufgrund einer auf das Werkzeug ausgeübten externen Kraft berechnet, und eine Korrekturprofilerzeugungseinheit umfasst, die ein Korrekturprofil erzeugt, das eine Beziehung zwischen dem Korrekturumfang, der von der Korrekturumfangsberechnungseinheit berechnet wurde, und der Zeit angibt.

Aufgabe der vorliegenden Erfindung ist es, einen Betrieb eines Roboters zu verbessern.

Diese Aufgabe wird durch ein Verfahren mit den Merkmalen des Anspruchs 1 gelöst. Ansprüche 13 bis 15 stellen ein System bzw. Computerprogrammprodukt zur Durchführung eines hier beschriebenen Verfahrens bzw. eine Roboteranordnung mit einem hier beschriebenen System unter Schutz. Die Unteransprüche betreffen vorteilhafte Weiterbildungen.

Nach einer Ausführung der vorliegenden Erfindung weist ein Verfahren zum Kalibrieren eines Modells eines Roboters, der in einer Ausführung zur Durchführung eines vorgegebenen Prozesses, insbesondere (Be)Arbeit(ung)sprozesses, in dem externe Kontaktkräfte auf den Roboter wirken, insbesondere einem Fließlochschrauben, Reib(rühr)schweißen, Bördeln, Fräsen, Schleifen oder dergleichen, vorgesehen, insbesondere eingerichtet, ist bzw. verwendet wird und daher vorliegend als Prozess-Roboter bezeichnet wird, die Schritte auf:

- in einer Kalibrierpose eines Roboters, der in einer Ausführung zum Kalibrieren des Models vorgesehen, insbesondere eingerichtet, ist bzw. verwendet wird und daher vorliegend als Kalibrier-Roboter bezeichnet wird:

    - Beaufschlagen des Kalibrier-Roboters mit einer Umgebungskontaktkraft und Ermitteln einer Kalibrierabweichung infolge des Beaufschlagens mit dieser Umgebungskontaktkraft; und (anschließend)
    - Beaufschlagen des Kalibrier-Roboters mit einer oder mehreren weiteren Umgebungskontaktkräften und (jeweils) Ermitteln einer weiteren Kalibrierabweichung infolge des Beaufschlagens mit dieser Umgebungskontaktkraft;

- in einer oder mehreren weiteren Kalibrierposen des Kalibrier-Roboters (jeweils):

    - Beaufschlagen des Kalibrier-Roboters mit einer Umgebungskontaktkraft und Ermitteln einer Kalibrierabweichung infolge des Beaufschlagens mit dieser Umgebungskontaktkraft; und (anschließend)
    - Beaufschlagen des Kalibrier-Roboters mit einer oder mehreren weiteren Umgebungskontaktkräften und (jeweils) Ermitteln einer weiteren Kalibrierabweichung infolge des Beaufschlagens mit dieser Umgebungskontaktkraft

und

- Kalibrieren eines Modells des Prozess-Roboters auf Basis dieser Posen, Umgebungskontaktkräfte und Kalibrierabweichungen.

Nach einer Ausführung der vorliegenden Erfindung weist ein Verfahren zum Betreiben eines Roboters, der vorliegend als Prozess-Roboter bezeichnet wird, die Schritte auf:

- für eine oder mehrere Prozessposen (jeweils):

    - Ermitteln einer Kontaktkraft, mit der der Prozess-Roboter in einem Prozess beaufschlagt wird und die vorliegend als Prozesskontaktkraft bezeichnet wird; und
    - Reduzieren, insbesondere Minimieren bzw. Kompensieren, einer Prozessabweichung des Prozess-Roboters infolge dieser Prozesskontaktkraft auf Basis eines, insbesondere nach einem hier beschriebenen Verfahren und/oder vor Durch- bzw. Ausführen des Prozesses, kalibrierten Modells.

Nach einer Ausführung der vorliegenden Erfindung ist ein System, insbesondere hard- und/oder software-, insbesondere programmtechnisch, zur Durchführung eines hier beschriebenen Verfahrens eingerichtet. In einer Ausführung weist das System entsprechend auf:

- Mittel zum Beaufschlagen des Kalibrier-Roboters mit einer Umgebungskontaktkraft und Ermitteln einer Kalibrierabweichung infolge des Beaufschlagens mit dieser Umgebungskontaktkraft;
- Mittel zum Beaufschlagen des Kalibrier-Roboters mit einer oder mehreren weiteren Umgebungskontaktkräften und (jeweils) Ermitteln einer weiteren Kalibrierabweichung infolge des Beaufschlagens mit dieser Umgebungskontaktkraft

in zwei oder mehr Kalibrierposen des Kalibrier-Roboters; und

- Mittel zum Kalibrieren eines Modells des Prozess-Roboters auf Basis dieser Posen, Umgebungskontaktkräfte und Kalibrierabweichungen.

Zusätzlich oder alternativ weist das System in einer Ausführung auf:

- Mittel zum Ermitteln einer Prozesskontaktkraft; und
- Mittel zum Reduzieren, insbesondere Minimieren bzw. Kompensieren, einer Prozessabweichung des Prozess-Roboters infolge dieser Prozesskontaktkraft auf Basis eines, insbesondere nach einem hier beschriebenen Verfahren und/oder vor Durch- bzw. Ausführen des Prozesses, kalibrierten Modells

für eine oder mehrere Prozessposen.

Zusätzlich oder alternativ zu Abweichungen, die aus konstanten Nutzlasten resultieren, kann durch das erfindungsgemäße Berücksichtigung von (Umgebungs- bzw. Prozess)Kontaktkräften, die in einem Prozess häufig wechseln, beim Kalibrieren eines Modells und/oder Betreiben des Prozess-Roboters auf Basis eines kalibrierten Modells die Präzision des Modells bzw. Roboters vorteilhaft erhöht werden.

Zur kompakteren Darstellung werden vorliegend auch antiparallele Kräftepaare, d.h. Drehmomente, verallgemeinernd als Kräfte im Sinne der vorliegenden Erfindung bezeichnet. Eine Kontaktkraft, insbesondere also eine Umgebungs- und/oder eine Prozesskontaktkraft, ist in einer Ausführung eine (Reaktions)Kraft, die eine, insbesondere ortsfeste, Umgebung auf den Roboter, insbesondere ein von diesem geführtes Werkzeug oder -stück, ausübt, eine von einer (internen) Gewichtskraft einer robotergeführten Last verschiedene (externe) K(ontaktk)raft.

Eine Abweichung, insbesondere also eine Kalibrier- und/oder eine Prozessabweichung, umfasst in einer Ausführung eine Differenz zwischen einem Ist- und einem Nominal-Zustand, insbesondere eine Differenz infolge elastischer Verformungen von Gliedern des Roboters, Getriebenachgiebigkeiten und/oder -spiel in Achsen des Roboters und dergleichen, insbesondere eine Lage- und/oder Winkeldifferenz (in) einer oder mehrerer Achsen und/oder roboterfester Referenzen wie beispielsweise seines TCPs. So kann eine Abweichung im Sinne der vorliegenden Erfindung in einer Ausführung eine Winkeldifferenz zwischen einem Winkel einer Ein- und einer Ausgangswelle eines Getriebes eines Antriebs einer oder mehrerer Achsen des Roboters umfassen, insbesondere sein. Zusätzlich oder alternativ kann eine Abweichung im Sinne der vorliegenden Erfindung in einer Ausführung eine Lage- und/oder Winkeldifferenz zwischen einer Nominallage bzw. -orientierung einer oder mehrerer Achsen und/oder einer roboterfesten Referenzen bei unverformtem Roboter und einer Ist-Lage bzw. -orientierung der Achsen bzw. Referenz bei infolge der Kontaktkraft elastisch verformtem Roboter umfassen, insbesondere sein.

In einer Ausführung sind Kalibrier-Roboter und Prozess-Roboter identisch, insbesondere kann der Prozess-Roboter, der auf Basis des kalibrierten Modells betrieben wird, bereits zum Kalibrieren des Modells bzw. zum Ermitteln der Kalibrierabweichungen verwendet werden. Hierdurch kann in einer Ausführung eine (roboter)individuelle und damit besonders genaue Kalibrierung gewährleistet werden.

In einer anderen Ausführung ist der Kalibrier-Roboter ein weiterer Roboter, der in einer Weiterbildung, insbesondere bezüglich seiner Nennmaße, typgleich zu dem Prozess-Roboter ist. Hierdurch kann in einer Ausführung ein Kalibrieraufwand für mehrere typgleiche Prozess-Roboter reduziert bzw. ein Modell für mehrere (Prozess)Roboter kalibriert bzw. verwendet werden.

In einer Ausführung prägen in einer oder mehrerer der Kalibrierposen des Kalibrier-Roboters Antriebe dieses Roboters (jeweils) zwei oder mehr unterschiedliche Antriebskräfte auf diesen auf, so dass dieser (hierdurch) mit unterschiedlichen Umgebungskontaktkräften beaufschlagt wird bzw. werden die Antriebe hierzu bzw. entsprechend angesteuert. Beispielsweise kann bei einem Kalibrier-Roboter, dessen Werkzeug oder Flansch die Umgebung kontaktiert, durch entsprechendes Erhöhen von Antriebskräften die Reaktionskontaktkraft der Umgebung auf Werkzeug bzw. Flansch erhöht und damit der Kalibrier-Roboter in derselben Kalibrierpose mit einer oder mehreren weiteren Umgebungskontaktkräften beaufschlagt werden.

Zusätzlich oder alternativ beaufschlagen in einer oder mehrerer der Kalibrierposen des Kalibrier-Roboters eine oder mehrerer von dem Kalibrier-Roboter separate Vorrichtungen, beispielsweise Hubzylinder, Förderbänder oder dergleichen, den Kalibrier-Roboter mit unterschiedlichen Umgebungskontaktkräften bzw. werden hierzu bzw. entsprechend aktuiert.

Hierdurch kann in einer Ausführung das Kalibrieren vereinfacht werden, insbesondere im Vergleich zu einem Kalibrieren mit verschiedenen Nennlasten, die hierzu ausgetauscht, d.h. vom Roboter jeweils abgelegt bzw. aufgenommen werden müssen.

In einer Ausführung betragen in einer oder mehrerer der Kalibrierposen (jeweils) eine oder mehrere der Umgebungskontaktkräfte höchstens 10% einer maximal zulässigen Umgebungskontaktkraft und/oder höchstens 1 kN, insbesondere höchstens 500 N.

Zusätzlich oder alternativ betragen in einer Ausführung in einer oder mehrerer der Kalibrierposen (jeweils) eine oder mehrere der Umgebungskontaktkräfte wenigstens 90% einer bzw. der maximal zulässigen Umgebungskontaktkraft und/oder wenigstens 10 kN.

Zusätzlich oder alternativ werden der Kalibrier-Roboter in einer oder mehrerer der Kalibrierposen (jeweils) mit einer minimalen Umgebungskontaktkraft, mit einer maximalen Umgebungskontaktkraft und einer oder mehreren unterschiedlichen Umgebungskontaktkräfte zwischen der minimalen Umgebungskontaktkraft und der maximalen Umgebungskontaktkraft beaufschlagt, hierfür Kalibrierabweichungen ermittelt und das Modell auf Basis dieser Umgebungskontaktkräfte und Kalibrierabweichungen kalibriert.

Hierdurch kann in einer Ausführung die Mächtigkeit bzw. der Einsatzbereich und/oder die Genauigkeit des Modells verbessert werden.

In einer Ausführung werden in einer oder mehreren der Kalibrierposen bei Beaufschlagung mit einer oder mehreren der Umgebungskontaktkräfte (jeweils) Abweichungen in einzelnen Achsen und/oder einzelner Achsen erfasst und die Kalibrierabweichung(en) auf Basis hiervon ermittelt. Kalibrierabweichungen können somit in einer Ausführung Einzelachsabweichungen bzw. Abweichungen einzelner Achsen infolge Beaufschlagung mit Umgebungskontaktkräften umfassen, insbesondere sein, beispielsweise aufgrund von Getriebenachgiebigkeiten und/oder - spiel oder dergleichen.

Zusätzlich oder alternativ werden in einer Ausführung in einer oder mehreren der Kalibrierposen bei Beaufschlagung mit einer oder mehreren der Umgebungskontaktkräfte (jeweils) Abweichungen einzelner Glieder des Kalibrier-Roboters erfasst und die Kalibrierabweichung(en) auf Basis hiervon ermittelt. Kalibrierabweichungen können somit in einer Ausführung Abweichungen einzelner Glieder infolge Beaufschlagung mit Umgebungskontaktkräften umfassen, insbesondere sein, beispielsweise elastische Verformungen der Glieder oder dergleichen.

Zusätzlich oder alternativ werden in einer Ausführung in einer oder mehreren der Kalibrierposen bei Beaufschlagung mit einer oder mehreren der Umgebungskontaktkräfte (jeweils) Abweichungen einer, insbesondere ein-, zwei- oder dreidimensionalen, (kartesischen) Lage und/oder, insbesondere ein-, zwei- oder dreidimensionalen, Orientierung, einer roboterfesten Referenz, insbesondere eines Werkzeugs, Endflansches und/oder TCPs, des Kalibrier-Roboters erfasst und die Kalibrierabweichung(en) auf Basis hiervon ermittelt. Kalibrierabweichungen können somit in einer Ausführung Abweichungen der Lage und/oder Orientierung einer roboterfesten Referenz, insbesondere eines Werkzeugs, Endflansches und/oder TCPs, infolge Beaufschlagung mit Umgebungskontaktkräften umfassen, insbesondere sein, beispielsweise aufgrund von Getriebenachgiebigkeiten und/oder-spiel in den Achsen, elastischen Verformungen der Glieder oder dergleichen.

Durch die Erfassung von Abweichungen einzelner Achsen und/oder Glieder bzw. entsprechende Kalibrierabweichungen kann in einer Ausführung vorteilhaft deren Ermittlung und/oder ein Bearbeitungs-, insbesondere Rechen- und/oder Steueraufwand, reduziert werden. Durch die Erfassung von Abweichungen der Lage und/oder Orientierung einer roboterfesten Referenz können in einer Ausführung vorteilhaft komplexe Überlagerungen von Getriebenachgiebigkeiten und/oder-spiel in den Achsen, elastischen Verformungen der Glieder und dergleichen kompensiert werden.

In einer Ausführung werden Abweichungen optisch erfasst. In einer Weiterbildung werden hierzu an einer oder mehrerer Achsen und/oder an einem oder mehreren Gliedern des Kalibrier-Roboters, insbesondere lösbar, optische Sender, Reflektoren, Marker oder dergleichen angeordnet und deren Position(en) bzw. Positionsänderungen infolge der Beaufschlagung mit Umgebungskontaktkräften optisch, insbesondere durch Lasertracker, Bildauswertung oder dergleichen, erfasst und hieraus die Kalibrierabweichungen ermittelt. Hierdurch können diese vorteilhaft präzise und/oder mit geringem (dauerhaften) apparativen Aufwand und/oder geringer (dauerhafter) Beeinträchtigung des Kalibrier-Roboters ermittelt werden.

Zusätzlich oder alternativ werden in einer Ausführung Abweichungen durch ein oder mehr Paare von Sensoren erfasst, die jeweils an einer Achse des Kalibrier-Roboters angeordnet sind (Sensorpaar), insbesondere durch sogenannte "secondary encoder" oder dergleichen. Hierdurch können diese vorteilhaft präzise und/oder in beliebigen Posen des Kalibrier-Roboters ermittelt werden.

In einer Ausführung wird für eine oder mehrere der Prozesspose (jeweils) die Prozesskontaktkraft vorab, insbesondere auf Basis eines geplanten Prozesses des Prozess-Roboters, prognostiziert. In einer Weiterbildung werden bzw. sind für einen geplanten Prozess jeweils Prozesskontaktkräfte für bestimmte Prozessposen vorab ermittelt, insbesondere empirisch und/oder durch Simulation, und abgespeichert, beispielsweise durch Kennfelder, Parametrisierung entsprechender Funktionen oder dergleichen. Dann können diese Prozesskontaktkräfte bei Anfahren der entsprechenden Prozessposen durch Abrufen bzw. Auswerten der hierfür abgespeicherten Prozesskontaktkräfte prognostiziert werden. Hierdurch kann in einer Ausführung eine Abweichung infolge solcher Prozesskontaktkräfte rasch(er) kompensiert werden.

Zusätzlich oder alternativ wird in einer Ausführung für eine oder mehrere der Prozesspose (jeweils) die (aktuelle) Prozesskontaktkraft erfasst. Hierdurch kann in einer Ausführung eine Abweichung infolge solcher Prozesskontaktkräfte präzise(r) kompensiert werden.

In einer Weiterbildung werden (aktuelle) Prozesskontaktkräfte mittels eines oder mehrerer, insbesondere mehrachsiger, insbesondere drei- oder sechsachsiger, Sensors bzw. Sensoren, insbesondere Kraft- bzw. Kraft-Momentensensors/-en, an einem Werkzeug und/oder Flansch des Prozess-Roboters erfasst. Hierdurch können in einer Ausführung vorteilhaft Beaufschlagungen des Werkzeugs bzw. Flanschs präzise(r) erfasst werden.

Zusätzlich oder alternativ werden in einer Weiterbildung (aktuelle) Prozesskontaktkräfte mittels (jeweils) einem oder mehreren Sensoren an einer oder mehreren Achsen des Prozess-Roboters und/oder einer Energie, insbesondere Energieaufnahme, eines oder mehrerer Antriebe des Prozess-Roboters erfasst. So können in einer Ausführung aus den jeweils von einem Sensorpaar an einer Achse erfassten Winkeldifferenzen, beispielsweise auf Basis des Hookschen Gesetztes, an diesen Achsen wirkende Kräfte und aus diesen mittels Transformation mit der entsprechenden Jacobimatrizen eine den Roboter beaufschlagende Kontaktkraft erfasst werden. Gleichermaßen können aus dem Stromverbrauch eines Antriebs, einem Integral-Anteil eines Antriebsreglers oder dergleichen, an Achsen wirkende Kräfte und aus diesen mittels Transformation mit der entsprechenden Jacobimatrizen eine den Roboter beaufschlagende Kontaktkraft erfasst werden. Hierdurch können in einer Ausführung vorteilhaft Kräfte an bzw. in einzelnen Achsen präzise(r) berücksichtigt werden.

Zusätzlich oder alternativ zu der Prozesskontaktkraft bzw. den Prozesskontaktkräften können in einer Ausführung auch eine oder mehrere der Umgebungskontaktkräfte beim bzw. zum Kalibrieren des Modells auf Basis eines geplanten Prozesses prognostiziert und/oder mittels eines oder mehrerer Sensoren an einem Werkzeug und/oder Flansch des Kalibrier-Roboters und/oder eines oder mehrerer Sensoren an einer oder mehreren Achsen des Kalibrier-Roboters und/oder einer Energie, insbesondere Energieaufnahme, eines oder mehrerer Antriebe des Kalibrier-Roboters, erfasst werden, in einer Ausführung hierdurch rasch(er) und/oder präzise(r).

In einer Ausführung erhöht und/oder reduziert sich die Prozesskontaktkraft in der bzw. einer oder mehreren der Prozesspose(n). Dann wird in einer Ausführung (jeweils) eine variierende Abweichung des Prozess-Roboters infolge dieser variierenden Prozesskontaktkraft auf Basis des kalibrierten Modells reduziert, insbesondere synchronisiert mit dieser variierenden Abweichung bzw. Prozesskontaktkraft. Hierdurch können in einer Ausführung vorteilhaft Abweichungen infolge solcher variierender Prozesskontaktkräfte präzise(r) kompensiert werden.

In einer Ausführung erhöht sich die Prozesskontaktkraft in der bzw. einer oder mehreren der Prozesspose(n jeweils) von einem Minimalwert, der in einer Weiterbildung, wenigstens im Wesentlichen, gleich Null ist, und/oder reduziert sich auf einen Minimalwert, der in einer Weiterbildung, wenigstens im Wesentlichen, gleich Null ist. Somit kann in einer Ausführung eine Prozesspose (jeweils), wenigstens im Wesentlichen, kontakt(kraft)frei angefahren bzw. (wieder) verlassen werden. Entsprechend liefert in einer Ausführung das kalibrierte Modell, falls eine ermittelte Prozesskontaktkraft einen vorgegebenen Minimalwert unterschreitet, insbesondere gleich Null ist, keine (zu kompensierende(n)) Prozessabweichung(en) bzw. Prozessabweichung(en) gleich Null, insbesondere bei bzw. für kontakt(kraft)freiem/-s Anfahren und/oder Verlassen der bzw. einer oder mehreren der Prozesspose(n jeweils) keine (prozesskontaktkraftbedingte(n)) Abweichung(en) bzw. Prozessabweichung(en) gleich Null. Somit kann in einer Ausführung verhindert werden, dass der Prozess-Roboter bereits beim Anfahren bzw. noch beim Verlassen der Prozesspose(n) Abweichungen kompensiert, die nur bzw. erst nach Aufbau bzw. nur vor Abbau der ermittelten (variierenden) Prozesskontaktkraft vorhanden sind, und somit insbesondere beim Anfahren bzw. Verlassen über eine Fläche, insbesondere eines Werkzeugs oder -stücks, schleifen würde oder dergleichen. In einer Ausführung ist bzw. sind die bzw. eine oder mehrere der Prozessposen Kontaktposen, bei bzw. in denen der Roboter, insbesondere ein robotergeführtes Werkzeug oder -stück, in und/oder außer Kontakt mit einer (Roboter)Umgebung gelangt bzw. ist.

In einer Ausführung gibt das Modell Abweichungen (in) einer oder mehreren Achsen und/oder eines oder mehrerer Gliedern und/oder eine Kompensation hierfür an. Es kann somit insbesondere ein Modell einzelner Achsen und/oder Glieder bzw. ihrer Abweichungen infolge des Beaufschlagens des Roboters mit unterschiedlichen Kontaktkräften umfassen, insbesondere sein, insbesondere also von Abweichungen in Achsen, beispielsweise einer Winkelabweichung eines Winkels um eine Drehachse, und/oder Abweichungen der Achsen, beispielsweise einer Lage und/oder Orientierung der Achse.

Zusätzlich oder alternativ gibt das Modell in einer Ausführung eine Abweichung einer Lage und/oder Orientierung einer roboterfesten Referenz, insbesondere eines Werkzeugs, Endflansches und/oder TCPs, des Prozess-Roboters in Abhängigkeit von einer Pose und einer diesen Roboter beaufschlagenden externen Kraft an. Es kann somit insbesondere ein Modell des gesamten Prozess-Roboters umfassen, insbesondere sein.

In einer Ausführung ist das Modell ein statisches Modell bzw. berücksichtigt keine dynamischen bzw. Trägheitskräfte bzw. hängt nicht von diesen ab. Hierdurch kann das Modell in einer Ausführung vorteilhaft kompakter sein und insbesondere rascher und/oder einfacher ausgewertet werden.

In einer anderen Ausführung ist das Modell ein dynamisches Modell bzw. berücksichtigt auch Trägheitskräfte des Prozess-Roboters bzw. hängt auch von diesen ab. Hierdurch kann das Modell in einer Ausführung vorteilhaft Abweichungen präziser angeben, die dadurch präzise(r) kompensiert werden können.

In einer Ausführung ist das Modell ein diskretes Modell, es kann insbesondere eine Zuordnung, insbesondere in Form eines Kennfeldes, einer Tabelle oder dergleichen, zwischen diskreten Posen, diskreten Kontaktkräften und diskreten Abweichungen aufweisen. In einer Weiterbildung wird zwischen diesen diskreten Posen und Kontaktkräften interpoliert, sofern Prozessposen und -kontaktkräfte keinen dieser diskreten Posen und Kontaktkräften des diskreten Modells entsprechen.

In einer Ausführung ist das Modell ein kontinuierliches Modell, es kann insbesondere eine Funktion aufweisen, die Posen und Kontaktkräfte parameterbasiert auf Abweichungen abbildet, wobei diese Parameter auf Basis der Umgebungskontaktkräfte und Kalibrierabweichungen sowie der zugehörigen Posen kalibriert werden, insbesondere mittels eines Ausgleichs- bzw. Optimierungsverfahrens, das die Parameter des Modells derart kalibriert, dass Unterschiede zwischen den ermittelten Kalibrierabweichungen und den von dem Modell für die entsprechenden Umgebungskontaktkräfte angegebenen Abweichungen minimal werden bzw. sind.

In einer Ausführung ist das Modell ein positions- bzw. absolutgenaues Modell des Prozess-Roboters.

Insbesondere zu dem (kalibrierten) Modell und dem Reduzieren von Prozessabweichungen auf dessen Basis wird ergänzend auf die eingangs genannte EP 2 272 637 B1 und EP 2 504 741 B1 Bezug genommen, wobei das in der EP 2 272 637 B1 näher erläuterte Modell *M* vorliegend zusätzlich Kontaktkräfte *F* berücksichtigt bzw. einen Zusammenhang zwischen Posen *q,* Kontaktkräften und Abweichungen $\Delta x$, insbesondere der roboterfesten Referenz und/oder in einzelnen und/oder einzelner Achsen und/oder Glieder des Roboters, beschreibt, etwa in der allgemeinen Form:

$$M: (q, F, \Delta x) = 0 \qquad (1').$$

Das kalibrierte Modell kann insbesondere vorteilhaft für eine Prozess-, insbesondere Bahnplanung, des Prozess-Roboters und/oder zum Steuern, insbesondere Regeln, des Prozess-Roboters verwendet werden. Entsprechend umfasst in einer Ausführung das Betreiben des Prozess-Roboters eine Planung eines Prozesses des Prozess-Roboters, insbesondere vorab bzw. offline, und/oder ein Steuern, insbesondere Regeln, des Prozess-Roboters im Betrieb bzw. online.

Der Prozess-Roboter weist in einer Ausführung eine oder mehrere, insbesondere wenigstens vier, insbesondere wenigstens sechs, insbesondere wenigstens sieben, Achsen bzw. Gelenke, insbesondere Drehachsen bzw. -gelenke, und Antriebe, insbesondere mit Elektromotoren und/oder Getrieben, zum Aktuieren bzw. Verstellen der Achsen auf. Insbesondere bei solchen Robotern wird ein erfindungsgemäßen Verfahren mit besonderem Vorteil verwendet.

In einer Ausführung wird für die bzw. eine oder mehrere der Prozesspose(n jeweils) die Prozessabweichung des Prozess-Roboters infolge der Prozesskontaktkraft auf Basis des kalibrierten Modells derart reduziert, dass eine auf Basis eines Nominal-Modells des Roboters vorgegebene Prozesspose zur Reduzierung der Prozessabweichung verändert (vorgegeben) bzw. Achsen bzw. Antriebe des Prozess-Roboters entsprechend gesteuert, insbesondere geregelt, werden, insbesondere mit einem entsprechenden Offset, der von der durch die Prozesskontaktkraft verursachten Prozessabweichung abhängt und diese reduziert, insbesondere minimiert bzw. kompensiert.

In einer Ausführung weist das System entsprechend auf:

Mittel zum Aufprägen unterschiedlicher Antriebskräfte in wenigstens einer der Kalibrierposen zum Beaufschlagen des Kalibrier-Roboters mit unterschiedlichen Umgebungskontaktkräften durch Antriebe dieses Roboters und/oder wenigstens eine von dem Kalibrier-Roboter separate Vorrichtungen zum Beaufschlagen des Kalibrier-Roboters in wenigstens einer der Kalibrierposen mit unterschiedlichen Umgebungskontaktkräften; und/oder

Mittel zum Beaufschlagen des Kalibrier-Roboters in wenigstens einer der Kalibrierposen mit einer minimalen Umgebungskontaktkraft, einer maximalen Umgebungskontaktkraft und wenigstens einer Umgebungskontaktkraft zwischen dieser minimalen und maximalen Umgebungskontaktkraft; und/oder Mittel zum Erfassen von Abweichungen in einzelnen Achsen und/oder Abweichungen einzelner Glieder des Kalibrier-Roboters und/oder einer Abweichung einer Lage und/oder Orientierung einer roboterfesten Referenz des Kalibrier-Roboters, in wenigstens einer der Kalibrierposen, insbesondere optisch und/oder durch wenigstens ein an einer Achse angeordnetes Sensorpaar, und zum Ermitteln wenigstens einer der Kalibrierabweichungen auf Basis hiervon; und/oder

Mittel zum Reduzieren einer variierenden Abweichung des Prozess-Roboters infolge sich erhöhender und/oder reduzierender Prozesskontaktkraft, insbesondere mit dieser synchronisiert, auf Basis des kalibrierten Modells; und/oder

Mittel zum Prognostizieren der Prozesskontaktkraft und/oder wenigstens einer der Umgebungskontaktkräfte, insbesondere auf Basis eines geplanten Prozesses;
und/oder

Mittel zum Erfassen der Prozesskontaktkraft, insbesondere mittels wenigstens eines Sensors an einem Werkzeug und/oder Flansch des Prozess-Roboters und/oder wenigstens eines Sensors an wenigstens einer Achse des Prozess-Roboters und/oder einer Energie wenigstens eines Antriebs des Prozess-Roboters, und/oder wenigstens einer der Umgebungskontaktkräfte, insbesondere mittels wenigstens eines Sensors an einem Werkzeug und/oder Flansch des Kalibrier-Roboters und/oder wenigstens eines Sensors an wenigstens einer Achse des Kalibrier-Roboters und/oder einer Energie wenigstens eines Antriebs des Kalibrier-Roboters;

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere den Prozess-Roboter und den Kalibrier-Roboter betreiben kann.

In einer Ausführung werden ein oder mehrere, insbesondere alle, Schritte des Verfahrens vollständig oder teilweise automatisiert durchgeführt, insbesondere durch das System bzw. seine Mittel.

Weitere Vorteile und Merkmale ergeben sich aus den Unteransprüchen und den Ausführungsbeispielen. Hierzu zeigt, teilweise schematisiert,:

Fig. 1: eine Roboteranordnung nach einer Ausführung der vorliegenden Erfindung mit einem Prozess-Roboter in einer Kalibrier- und Prozesspose;

Fig. 2: die Roboteranordnung mit dem Prozess-Roboter in einer weiteren Kalibrier- und Prozesspose; und

Fig. 3: ein Verfahren zum Betreiben des Prozess-Roboters nach einer Ausführung der vorliegenden Erfindung.

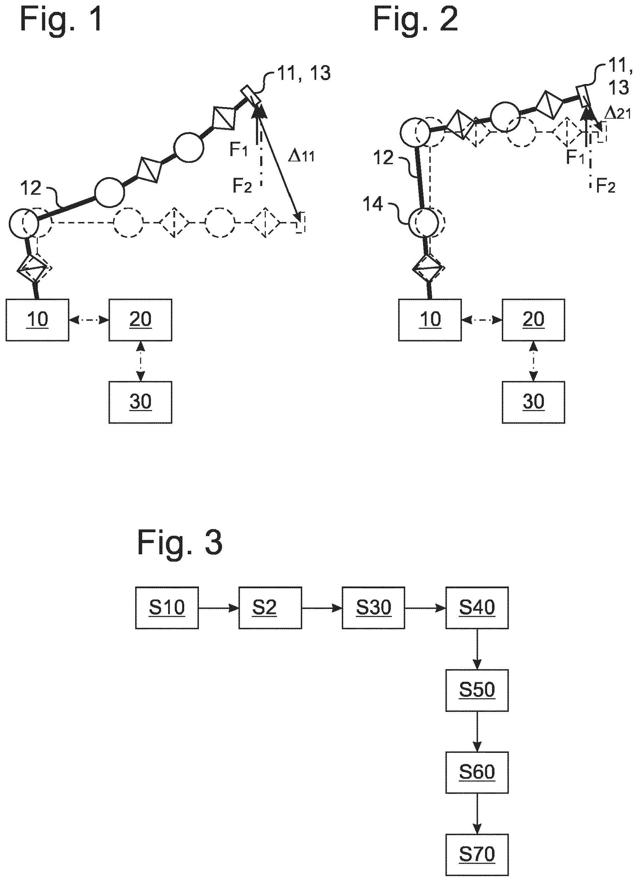

Fig. 1 zeigt eine Roboteranordnung nach einer Ausführung der vorliegenden Erfindung mit einem sechsachsigen Prozess-Roboter 10 und einer Robotersteuerung 20, die ein nachfolgend mit Bezug auf Fig. 3 erläutertes Verfahren zum Kalibrieren eines Modells des Prozess-Roboters 10 und zum Betreiben des Prozess-Roboters 10 auf Basis dieses kalibrierten Modells nach einer Ausführung der vorliegenden Erfindung durchführt.

Zum Kalibrieren des Modells des Prozess-Roboters 10 fährt die Robotersteuerung 20 zunächst in einem Schritt S10 eine erste Kalibrierpose an, in der dieser, wie in Fig. 1 gestrichelt angedeutet, einen Roboterarm horizontal ausstreckt.

In dieser ersten Kalibrierpose wird ein Werkzeugflansch 11 des Prozess-Roboters 10 zunächst mit einer ersten Umgebungskontaktkraft $F_1$ beaufschlagt. Hierdurch verformt sich der Roboterarm infolge elastischer Deformationen seiner Glieder, Getriebenachgiebigkeiten seiner Antriebe und dergleichen aus der in Fig. 1 gestrichelt angedeuteten Nominalkonfiguration in eine in Fig. 1 ausgezogene verformte Konfiguration. Die sich dabei ergebende Abweichung $\Delta_{11}$ der Lage und Orientierung seines Werkzeugflanschs 11 wird beispielsweise mittels eines Lasertrackers 30 erfasst, sie ist in Fig. 1 zur Verdeutlichung stark übertrieben dargestellt.

Dann erhöht die Robotersteuerung 20 in einem Schritt S20 die Antriebskräfte so, dass der Werkzeugflansch 11 mit einer weiteren, größeren Umgebungskontaktkraft $F_2 > F_1$ beaufschlagt wird, die in Fig. 1 strichpunktiert angedeutet ist. Die sich dabei ergebende weitere Abweichung $\Delta_{12}$ der Lage und Orientierung seines Werkzeugflanschs 11 wird wiederum mittels des Lasertrackers 30 erfasst (in Fig. 1 zur besseren Übersichtlichkeit nicht dargestellt).

Dann fährt die Robotersteuerung 20 in einem Schritt S30 mit dem Prozess-Roboter 10 eine weitere, zweite Kalibrierpose an, in der eine distale Schwinge 12 seines Roboterarms, wie in Fig. 2 gestrichelt angedeutet, vertikal nach oben ausstreckt und der restliche Roboterarm wiederum horizontal ausstreckt ist.

In dieser zweiten Kalibrierpose wird der Werkzeugflansch 11 des Prozess-Roboters 10 zunächst wiederum mit der ersten Umgebungskontaktkraft $F_1$ beaufschlagt, so dass sich der Roboterarm infolge elastischer Deformationen seiner Glieder, Getriebenachgiebigkeiten seiner Antriebe und dergleichen aus der in Fig. 2 gestrichelt angedeuteten Nominalkonfiguration in eine in Fig. 2 ausgezogene verformte Konfiguration verformt. Die sich dabei ergebende Abweichung $\Delta_{21}$ der Lage und Orientierung seines Werkzeugflanschs 11 (in Fig. 2 zur Verdeutlichung stark übertrieben dargestellt) wird mittels des Lasertrackers 30 erfasst.

Dann erhöht die Robotersteuerung 20 in einem Schritt S40 die Antriebskräfte so, dass der Werkzeugflansch 11 mit der größeren Umgebungskontaktkraft $F_2 > F_1$ beaufschlagt wird. Die sich dabei ergebende weitere Abweichung $\Delta_{22}$ der Lage und Orientierung seines Werkzeugflanschs 11 wird wiederum mittels des Lasertrackers 30 erfasst (in Fig. 2 nicht dargestellt).

In einer nicht dargestellten Abwandlung kann die Robotersteuerung 20 in der ersten und/oder zweiten Pose die Antriebskräfte jeweils so erhöhen, dass der Werkzeugflansch 11 mit weiteren Umgebungskontaktkräften $F_i$ beaufschlagt wird, und die sich dabei ergebenden weiteren Abweichung $\Delta_{1i}$, $\Delta_{2i}$, mittels des Lasertrackers 30 erfassen. Zusätzlich oder alternativ kann die Robotersteuerung 20 weitere Posen j anfahren und in diesen für unterschiedliche Umgebungskontaktkräfte k weitere Abweichung $\Delta_{ik}$ erfassen. Zusätzlich oder alternativ kann der Prozess-Roboter 10 in den verschiedenen Posen auch mit verschiedenen Umgebungskontaktkräften beaufschlagt werden, also beispielsweise die Umgebungskontaktkraft $F_1$ in Fig. 1 größer sein als die Umgebungskontaktkraft $F_1$ in Fig. 2.

Dann kalibriert die Robotersteuerung 20 in Schritt S50 ein absolutgenaues Modell des Prozess-Roboters 10 auf Basis dieser Posen, Umgebungskontaktkräfte $F_1, F_2, F_i$ und Kalibrierabweichungen $\Delta_{11} - \Delta_{jk}$ so, dass es für diese Posen und Umgebungskontaktkräfte diese Kalibrierabweichungen möglichst gut kompensiert.

In Schritten S60, S70 fährt die Robotersteuerung 20 in einem Arbeitsprozess des Prozess-Roboters 10 mit diesem Prozessposen an, beispielsweise in Schritt S60 die mit Bezug auf Fig. 1 erläuterte horizontal ausgestreckte Pose und in Schritt S70 die mit Bezug auf Fig. 2 erläuterte Pose mit vertikal nach oben ausgestreckter Schwinge 12 und horizontal ausgestrecktem restlichen Roboterarm.

Auf Basis eines sechsachsigen Kraft-Momentensensors 13 am Werkzeugflansch 11 erfasst die Robotersteuerung 20 in diesen Prozessposen jeweils auftretende Prozesskontaktkräfte und kompensiert Prozessabweichungen der Lage und Orientierung des Werkzeugflanschs 11 infolge dieser Prozesskontaktkräfte auf Basis des kalibrierten Modells, so dass der Prozess-Roboters 10 Soll-Lagen und - Orientierungen mit seinem Werkzeugflansch 11 bei den Prozesskontaktkräften möglichst präzise einnimmt.

In einer Abwandlung werden in den Kalibrierposen zusätzlich oder alternativ Kalibrierabweichungen in einzelnen Achsen des Roboterarms erfasst, beispielsweise Abweichungen infolge von Getriebespiel und -nachgiebigkeit mittels Encoderpaaren an den jeweiligen Achsen, optischer Vermessung der Winkellagen der Achsen mittels Erfassen von Reflektoren (nicht dargestellt) an den Gliedern des Prozess-Roboters 10 mittes des Lasertrackers 30 oder dergleichen.

in Schritt S50 wird in der Abwandlung auf Basis dieser Kalibrierabweichungen ein Modell kalibriert, das den diskreten Posen und Umgebungskontaktkräften $F_1, F_2, F_i$ jeweils die dabei auftretenden Einzelachsabweichungen zuordnet.

In den Schritten S60, S70 prognostiziert die Robotersteuerung 20 auf Basis des vorgegebenen Arbeitsprozesses die in den jeweiligen Prozessposen auftretenden Prozesskontaktkräfte bereits vor Anfahren der entsprechenden Prozesspose und kompensiert Prozessabweichungen in den einzelnen Achsen infolge dieser Prozesskontaktkräfte auf Basis des kalibrierten Modells, insbesondere synchron mit dem Aufbau der entsprechenden Prozesskontaktkräfte. Liegt beispielsweise ein prognostiziert Prozesskontaktkraft zwischen den beiden Umgebungskontaktkräften $F_1, F_2$, so kann die Robotersteuerung 20 die Prozessabweichung infolge dieser Prozesskontaktkraft auf Basis der Umgebungskontaktkräfte $F_1, F_2$, interpolieren. Gleiches gilt analog für Prozessposen, die zwischen Kalibrierposen liegen.

Nimmt man zum besseren Verständnis sehr stark vereinfachend an, dass der Prozess-Roboter 10 nur im Antrieb seiner Drehachse 14, welche Schwinge 12 trägt (vgl. Fig. 2), eine nennenswerte Getriebenachgiebigkeit c aufwiese, während alle anderen Antriebe und seine Glieder demgegenüber vernachlässigbar nachgiebig bzw. elastisch wären, so wäre ein sehr einfaches Modell dieses Prozess-Roboters 10 bei einer Einheitslänge 1/5 aller Glieder und der konstanten Winkelstellung für alle anderen Drehachsen sowie der Richtung der Kontaktkraft F der Fig. 1 gemäß Gleichung (1') beispielsweise:

$$F \cdot l \cdot \cos(q_{14} + \Delta x) = c \cdot \Delta x$$

mit der Nominal- bzw. Winkelstellung $q_{14}$ einer Eingangsachse eines Getriebes bzw. einer Abtriebswelle eines (Elektro)Motors des Antriebs der Drehachse 14 und der Abweichung $\Delta x$ der Schwinge 12 gegenüber der hierdurch definierten Nominallage.

Man erkennt an diesem sehr einfachen Beispiel, dass dieses Modell bzw. sein Parameter c auf Basis der beiden ermittelten Umgebungskontaktkräfte $F_1$, $F_2$ in Fig. 1 und der Posen $q_{14} = 0$ (vgl. Fig. 1) und $q_{14} = 90°$ (vgl. Fig. 2, allerdings mit der konstanten Winkelstellung der Fig. 1 für alle anderen Drehachsen, d.h. komplett vertikal nach oben ausgestrecktem Roboterarm) mittels eines least-square-Ausgleichsverfahrens kalibriert werden kann. Gleichermaßen erkennt man, dass dieses Modell auch die Kompensation $-\Delta x$ angibt, um die die Nominal- bzw. Winkelstellung $q_{14}$ "vorgestellt" werden muss, um eine Prozessabweichung infolge einer Prozesskontaktkraft zu kompensieren.

In der Abwandlung kann entsprechend in diesem sehr einfachen Beispiel das kalibrierte Modell für verschiedene diskrete Posen, beispielsweise $q_{14} = 0$, $\pm 5°$, $\pm 10°,...$ und Kontaktkräfte F = 0 kN, $\pm$ 0,1 kN, $\pm$ 0,2 kN jeweils eine entsprechende Abweichung $\Delta x$ bzw. Kompensation $-\Delta x$ angeben, wobei für Posen und Prozesskontaktkräfte, die zwischen diesen diskreten Werten liegen, die Abweichung bzw. Kompensation interpoliert wird.

Man erkennt insbesondere, dass das kalibrierte Modell für Kontaktkräfte, die gleich Null sind, keine bzw. eine Null-Abweichung ($\Delta x = 0$) bzw. Kompensation angibt. Entsprechend kann eine Prozesspose, in der eine Prozesskontaktkraft erst aufgebaut werden soll, zunächst ohne Kompensation der dort anschließend aufzubringenden Prozesskontaktkraft angefahren werden, so dass der Roboter nicht aufgrund einer Kompensation einer noch nicht vorhandenen Prozesskonktaktkraft unerwünscht über eine Fläche schleift oder dergleichen. Anschließend gibt das kalibrierte Modell synchron zum Aufbau der Prozesskontaktkraft die entsprechende Abweichung $\Delta x$ bzw. Kompensation $-\Delta x$ an, so dass die hiermit variierende Prozessabweichung reduziert wird. Gleiches gilt analog für ein Verlassen der Prozesspose nach Abbau der dort aufgebrachten Prozesskraft.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

Bezugszeichenliste

| 10 | Roboter |
|----|---------|
| 11 | Werkzeugflansch |
| 12 | Schwinge |
| 13 | Kraft-Momentensensor |
| 14 | Drehachse bzw. -gelenk |
| 20 | Robotersteuerung |
| 30 | Lasertracker |
| $F_1, F_2$ | Kontaktkraft |
| $\Delta_{11}, \Delta_{21},$ | Abweichung |

**Patentansprüche**

1. Verfahren zum Kalibrieren eines Modells eines Prozess-Roboters (10), mit den Schritten:

   - Beaufschlagen (S10, S30) eines Kalibrier-Roboters (10), der zum Kalibrieren des Modells vorgesehen ist, mit einer Umgebungskontaktkraft ($F_1$) und Ermitteln einer Kalibrierabweichung ($\Delta_{11}$) infolge des Beaufschlagens mit dieser Umgebungskontaktkraft;
   - Beaufschlagen (S20, S40) des Kalibrier-Roboters mit wenigstens einer weiteren Umgebungskontaktkraft ($F_2$) und Ermitteln einer weiteren Kalibrierabweichung ($\Delta_{21}$) infolge des Beaufschlagens mit dieser Umgebungskontaktkraft in wenigstens zwei Kalibrierposen des Kalibrier-Roboters; und
   - Kalibrieren (S50) eines Modells des Prozess-Roboters auf Basis dieser Posen, Umgebungskontaktkräfte und Kalibrierabweichungen, wobei die Umgebungskontaktkraft eine von einer Gewichtskraft einer robotergeführten Last verschiedene Kraft ist, die eine Umgebung auf den Roboter ausübt.

2. Verfahren nach Anspruch 1, **dadurch gekennzeichnet, dass** der Kalibrier-Roboter der Prozess-Roboter oder ein, insbesondere hierzu typgleicher, weiterer Roboter ist.

3. Verfahren nach einem der vorhergehenden Ansprüche, **dadurch gekennzeichnet, dass** in wenigstens einer der Kalibrierposen zum Beaufschlagen des Kalibrier-Roboters mit unterschiedlichen Umgebungskontaktkräften Antriebe dieses Roboters unterschiedliche Antriebskräfte aufprägen und/oder wenigstens eine von dem Kalibrier-Roboter separate Vorrichtung den Kalibrier-Roboter mit unterschiedlichen Umgebungskontaktkräften beaufschlagt.

4. Verfahren nach einem der vorhergehenden Ansprüche, **dadurch gekennzeichnet, dass** in wenigstens einer der Kalibrierposen wenigstens eine der Umgebungskontaktkräfte höchstens 10% einer maximal zulässigen Umgebungskontaktkraft und/oder höchstens 1 kN und/oder wenigstens eine der Umgebungskontaktkräfte wenigstens 90% einer maximal zulässigen Umgebungskontaktkraft und/oder wenigstens 10 kN beträgt und/oder der Kalibrier-Roboter in wenigstens einer der Kalibrierposen mit einer minimalen Umgebungskontaktkraft, einer maximalen Umgebungskontaktkraft und wenigstens einer Umgebungskontaktkraft zwischen dieser minimalen und maximalen Umgebungskontaktkraft beaufschlagt wird.

5. Verfahren nach einem der vorhergehenden Ansprüche, **dadurch gekennzeichnet, dass** in wenigstens einer der Kalibrierposen Abweichungen in einzelnen Achsen und/oder Abweichungen einzelner Glieder des Kalibrier-Roboters und/oder eine Abweichung einer Lage und/oder Orientierung einer roboterfesten Referenz des Kalibrier-Roboters, insbesondere optisch und/oder durch wenigstens ein an einer Achse angeordnetes Sensorpaar, erfasst und wenigstens eine der Kalibrierabweichungen auf Basis hiervon ermittelt wird.

6. Verfahren zum Betreiben eines Prozess-Roboters (10), mit den Schritten:

   - Ermitteln (S60, S70) einer Prozesskontaktkraft ($F_1$, $F_2$); und
   - Reduzieren (S60, S70) einer Prozessabweichung ($\Delta_{11}$, $\Delta_{21}$) des Prozess-Roboters infolge dieser Prozesskontaktkraft auf Basis eines nach einem der vorhergehenden Ansprüche kalibrierten Modells des Prozess-Roboters für wenigstens eine Prozesspose, wobei die Prozesskontaktkraft eine von einer Gewichtskraft einer robotergeführten Last verschiedene Kraft ist, die eine Umgebung auf den Roboter ausübt.

7. Verfahren nach dem vorhergehenden Anspruch, **dadurch gekennzeichnet, dass** die Prozesskontaktkraft sich erhöht und/oder reduziert und eine variierende Abweichung des Prozess-Roboters infolge dieser variierenden Prozesskontaktkraft, insbesondere mit dieser synchronisiert, auf Basis des kalibrierten Modells reduziert wird.

8. Verfahren nach einem der beiden vorhergehenden Ansprüche, **dadurch gekennzeichnet, dass** das Betreiben des Prozess-Roboters eine Planung eines Prozesses des Prozess-Roboters und/oder ein Steuern, insbesondere Regeln, des Prozess-Roboters umfasst.

9. Verfahren nach einem der Ansprüche 6 bis 8, **dadurch gekennzeichnet, dass** die Prozesskontaktkraft, insbesondere auf Basis eines geplanten Prozesses, prognostiziert wird; und/oder die Prozesskontaktkraft, insbesondere mittels wenigstens eines Sensors an einem Werkzeug und/oder Flansch des Prozess-Roboters und/oder wenigstens eines Sensors an wenigstens einer Achse des Prozess-Roboters und/oder einer Energie wenigstens eines Antriebs des Prozess-Roboters, erfasst wird

10. Verfahren nach einem der vorhergehenden Ansprüche, **dadurch gekennzeichnet, dass** wenigstens eine der Umgebungskontaktkräfte, insbesondere mittels wenigstens eines Sensors an einem Werkzeug und/oder Flansch des Kalibrier-Roboters und/oder wenigstens eines Sensors an wenigstens einer Achse des Kalibrier-Roboters und/oder einer Energie wenigstens eines Antriebs des Kalibrier-Roboters, erfasst wird; und/oder wenigstens eine der Umgebungskontaktkräfte prognostiziert wird.

11. Verfahren nach einem der vorhergehenden Ansprüche, **dadurch gekennzeichnet, dass** das Modell eine Abweichung wenigstens einer Achse und/oder in wenigstens einer Achse und/oder eine Abweichung wenigstens eines Gliedes und/oder eine Abweichung einer Lage und/oder Orientierung einer roboterfesten Referenz des Prozess-Roboters in Abhängigkeit von einer Pose und einer diesen Roboter beaufschlagenden externen Kraft und/oder eine Kompensation hierfür angibt.

12. Verfahren nach einem der vorhergehenden Ansprüche, **dadurch gekennzeichnet, dass** das Modell ein statisches oder dynamisches und/oder ein diskretes oder kontinuierliches ist, insbesondere ein absolutgenaues Modell.

13. System (20, 30), das zur Durchführung eines Verfahrens nach einem der vorhergehenden Ansprüche eingerichtet ist.

14. Roboteranordnung, die wenigstens einen Prozess-Roboter (10) und ein System (20, 30) nach Anspruch 13 aufweist.

15. Computerprogrammprodukt mit einem Programmcode, der auf einem von einem Computer lesbaren Medium gespeichert ist und bei der Ausführung des Programms durch ein System nach Anspruch 13 dieses veranlasst, ein Verfahren nach einem der vorhergehenden Ansprüche 1 bis 12 durchzuführen.

**Claims**

1. A method of calibrating a model of a process robot (10), wherein the method comprises the steps of:

   - applying (S10, S30) an ambient contact force ($F_1$) to a calibration robot (10), which is provided in order to calibrate the model, and determining a calibration deviation ($\Delta_{11}$) as a result of the application of this ambient contact force;
   - applying (S20, S40) at least one further ambient contact force ($F_2$) to the calibration robot and determining a further calibration deviation ($\Delta_{21}$) as a result of the application of this ambient contact force
   in at least two calibration poses of the calibration robot; and
   - calibrating (S50) a model of the process robot on the basis of these poses, these ambient contact forces and these calibration deviations,
   wherein the ambient contact force is a force which is different from a weight force of a robot-guided load, and wherein the ambient contact force is a force which an environment exerts on the robot.

2. The method as claimed in claim 1, **characterised in that** the calibration robot is the process robot or a further robot, in particular a further robot of the same type.

3. The method as claimed in any one of the preceding claims, **characterised in that**, in at least one of the calibration poses, in order for different ambient contact forces to be applied to the calibration robot, drives of this robot apply different drive forces and / or at least one device which is separate from the calibration robot applies different ambient contact forces to the calibration robot.

4. The method as claimed in any one of the preceding claims, **characterised in that**, in at least one of the calibration poses, at least one of the ambient contact forces is at most 10% of a maximum permissible ambient contact force and / or at most 1 kN, and / or at least one of the ambient contact forces is at least 90% of a maximum permissible ambient contact force and / or at least 10 kN, and / or, in at least one of the calibration poses, the calibration robot is subjected to the application of a minimum ambient contact force, a maximum ambient contact force and at least one ambient contact force between this minimum ambient contact force and this maximum ambient contact force.

5. The method as claimed in any one of the preceding claims, **characterised in that**, in at least one of the calibration poses, deviations in individual axes and / or deviations of individual members of the calibration robot and / or a deviation of a position and / or orientation of a robot-fixed reference of the calibration robot are detected, in particular optically and / or by means of at least one pair of sensors which is arranged on an axis, and at least one of the calibration deviations is determined on the basis thereof.

6. A method of operating a process robot (10), wherein the method comprises the steps of:

   - determining (S60, S70) a process contact force ($F_1$, $F_2$); and
   - reducing (S60, S70) a process deviation ($\Delta_{11}$, $\Delta_{21}$) of the process robot as a result of this process contact force on the basis of a model of the process robot, which model has been calibrated in accordance with any one of the preceding claims

   for at least one process pose,

   wherein the process contact force is a force which is different from a weight force of a robot-guided load, and which is a force which an environment exerts on the robot.

7. The method as claimed in the preceding claim, **characterised in that** the process contact force is increased and / or reduced and a varying deviation of the process robot is reduced on the basis of the calibrated model as a result of this varying process contact force, and, in particular, that the process contact force is increased and / or reduced and a varying deviation of the process robot is reduced on the basis of the calibrated model in a manner that is synchronised with this varying process contact force.

8. The method as claimed in any one of the two preceding claims, **characterised in that** the operation of the process robot comprises planning a process of the process robot and / or controlling the process robot, in particular controlling the process robot with closed-loop feedback.

9. The method as claimed in any one of claims 6 to 8, **characterised in that** the process contact force is predicted, in particular on the basis of a planned process; and / or

   the process contact force is detected, in particular by means of at least one sensor on a tool and / or a flange of the process robot and / or at least one sensor on at least one axis of the process robot and / or an energy of at least one drive of the process robot.

10. The method as claimed in any one of the preceding claims, **characterised in that** at least one of the ambient contact forces is detected, in particular by means of at least one sensor on a tool and / or on a flange of the calibration robot and / or at least one sensor on at least one axis of the calibration robot and / or an energy of at least one drive of the calibration robot; and / or at least one of the ambient contact forces is predicted.

11. The method as claimed in any one of the preceding claims, **characterised in that** the model indicates a deviation of at least one axis and / or in at least one axis and / or a deviation of at least one member and / or a deviation of a position and / or orientation of a robot-fixed reference of the process robot as a function of a pose and an external force which this robot is subjected to and / or a compensation therefor.

12. The method as claimed in any one of the preceding claims, **characterised in that** the model is a static model or a dynamic model and / or a discrete model or a continuous model, in particular an absolutely accurate model.

13. A system (20, 30), which is set up for carrying out a method as claimed in any one of the preceding claims.

14. A robot arrangement comprising at least one process robot (10) and a system (20, 30) as claimed in claim 13.

15. A computer program product comprising a program code which is stored on a medium which can be read by a computer and which, when the program is being executed by a system as claimed in claim 13, causes the system to carry out a method as claimed in any one of the preceding claims 1 to 12.

**Revendications**

1. Procédé d'étalonnage d'un modèle d'un robot de traitement (10), avec les étapes :

   - d'exposition (S10, S30) d'un robot d'étalonnage (10), qui est prévu pour étalonner le modèle, à l'action d'une force de contact environnementale ($F_1$), et de détermination d'un écart d'étalonnage ($\Delta_{11}$) dû à l'exposition à l'action de ladite force de contact environnementale ;
   - d'exposition (S20, S40) du robot d'étalonnage à l'action d'au moins une autre force de contact environnementale ($F_2$) et de détermination d'un autre écart d'étalonnage ($\Delta_{21}$) dû à l'exposition à ladite force de contact environnementale dans au moins deux poses d'étalonnage du robot d'étalonnage ; et

- d'étalonnage (S50) d'un modèle du robot de traitement sur la base desdites poses, des forces de contact environnementales et des écarts d'étalonnage,

dans lequel la force de contact environnementale est une force différente d'une force liée au poids d'une charge guidée par le robot, qui exerce un environnement sur le robot.

2. Procédé selon la revendication 1, **caractérisé en ce que** le robot d'étalonnage est le robot de traitement ou un autre robot en particulier de type identique à cet effet.

3. Procédé selon l'une quelconque des revendications précédentes, **caractérisé en ce que** des entraînements dudit robot appliquent différentes forces d'entraînement dans au moins une des poses d'étalonnage pour exposer le robot d'étalonnage à l'action de différentes forces de contact environnementales et/ou au moins un dispositif séparé du robot d'étalonnage expose le robot d'étalonnage à l'action de différentes forces de contact environnementales.

4. Procédé selon l'une quelconque des revendications précédentes, **caractérisé en ce que** dans au moins une des poses d'étalonnage, au moins une des forces de contact environnementales représente au maximum 10 % d'une force de contact environnementale maximale admissible et/ou au maximum 1 kN et/ou au moins une des forces de contact environnementales représente au moins 90 % d'une force de contact environnementale maximale admissible et/ou au moins 10 kN et/ou le robot d'étalonnage est exposé dans au moins une des poses d'étalonnage à l'action d'une force de contact environnementale minimale, d'une force de contact environnementale maximale et d'au moins une force de contact environnementale entre ladite force de contact environnementale minimale et ladite force de contact environnementale maximale.

5. Procédé selon l'une quelconque des revendications précédentes, **caractérisé en ce que** des écarts dans divers axes et/ou des écarts de divers organes du robot d'étalonnage et/ou un écart d'une position et/ou d'une orientation d'une référence solidaire du robot du robot d'étalonnage sont détectés dans au moins une des poses d'étalonnage en particulier de manière optique et/ou par au moins une paire de capteurs disposée sur un axe, et au moins un des écarts d'étalonnage est déterminé sur cette base.

6. Procédé destiné à faire fonctionner un robot de traitement (10), avec les étapes :

- de détermination (S60, S70) d'une force de contact de traitement ($F_1$, $F_2$) ; et
- de réduction (S60, S70) d'un écart de traitement ($\Delta_{11}$, $\Delta_{21}$) du robot de traitement dû à une force de contact de traitement sur la base d'un modèle, étalonné selon l'une quelconque des revendications précédentes, du robot de traitement

pour au moins une pose de traitement,

dans lequel la force de contact de traitement est une force différente d'une force liée au poids d'une charge guidée par le robot, qui exerce un environnement sur le robot.

7. Procédé selon la revendication précédente, **caractérisé en ce que** la force de contact de traitement augmente et/ou se réduit et un écart variable du robot de traitement dû à ladite force de contact de traitement variable, en particulier synchronisé avec celle-ci, est réduit sur la base du modèle étalonné.

8. Procédé selon l'une quelconque des deux revendications précédentes, **caractérisé en ce que** le fonctionnement du robot de traitement comprend une planification d'un processus d'un robot de traitement et/ou une commande, en particulier une régulation, du robot de traitement.

9. Procédé selon l'une quelconque des revendications 6 à 8, **caractérisé en ce que** la force de contact de traitement est prédite en particulier sur la base d'un traitement planifié ; et/ou

la force de contact de traitement est détectée en particulier au moyen d'un capteur sur un outil et/ou une bride du robot de traitement et/ou au moyen d'au moins un capteur sur au moins un axe du robot de traitement et/ou au moyen d'une énergie d'au moins un entraînement du robot de traitement.

10. Procédé selon l'une quelconque des revendications précédentes, **caractérisé en ce qu'**au moins une des forces de contact environnementales est détectée en particulier au moyen d'au moins un capteur sur un outil et/ou une bride du robot d'étalonnage et/ou au moyen d'au moins un capteur sur au moins un axe du robot d'étalonnage et/ou au moyen d'une énergie d'au moins un entraînement du robot d'étalonnage ; et/ou au moins une des forces de contact environnementales est prédite.

11. Procédé selon l'une quelconque des revendications précédentes, **caractérisé en ce que** le modèle indique un écart d'au moins un axe et/ou dans au moins un axe et/ou un écart d'au moins un organe et/ou un écart d'une position et/ou d'une orientation d'une référence solidaire du robot du robot de traitement en fonction d'une pose et d'une force externe exposant ledit robot à une action et/ou une compensation associée.

12. Procédé selon l'une quelconque des revendications précédentes, **caractérisé en ce que** le modèle est un modèle statique ou dynamique et/ou un modèle discret ou continu, en particulier un modèle à précision absolue.

13. Système (20, 30), qui est mis au point pour la mise en œuvre d'un procédé selon l'une quelconque des revendications précédentes.

14. Ensemble de robot, qui présente au moins un robot de traitement (10) et un système (20, 30) selon la revendication 13.

15. Produit de programme informatique avec un code de programme, qui est mémorisé sur un support lisible par un ordinateur et qui amène celui-ci, lors de l'exécution du programme par un système selon la revendication 13, à mettre en œuvre un procédé selon l'une quelconque des revendications précédentes 1 à 12.

# Fig. 1

# Fig. 2

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2272637 B1
- EP 2504741 B1

- DE 102015009872 A1